# EUROPEAN PATENT SPECIFICATION

(11) **EP 4 412 077 B1**
(45) Date of publication and mention of the grant of the patent: **26.08.2026**
(21) Application number: 22875070.9
(22) Date of filing: 29.09.2022
(51) Int. Cl.: H02P 21/05, H02P 21/22, H02P 25/03

(54) **HARMONIC CURRENT INJECTION METHOD FOR SUPPRESSING VEHICLE LOW-SPEED VIBRATION, APPARATUS AND COMPUTER-READABLE STORAGE MEDIUM**
OBERSCHWINGUNGSSTROMINJEKTIONSVERFAHREN ZUR UNTERDRÜCKUNG VON SCHWINGUNGEN BEI NIEDRIGER GESCHWINDIGKEIT EINES FAHRZEUGS, VORRICHTUNG UND COMPUTERLESBARES SPEICHERMEDIUM
PROCÉDÉ D'INJECTION DE COURANTS HARMONIQUES POUR CONTRECARRER LES VIBRATIONS D'UN VÉHICULE À FAIBLE VITESSE, APPAREIL ET SUPPORT DE STOCKAGE LISIBLE PAR ORDINATEUR

(30) Priority: 29.09.2021 CN 202111150042
(43) Date of publication of application: 07.08.2024
(73) Proprietor: XPT EDS (Hefei) Co., Ltd., Hefei City, Anhui 230601 (CN)
(72) Inventor: LIU, Di, Hefei, Anhui 230601 (CN); WANG, Kai, Hefei, Anhui 230601 (CN)
(74) Representative: Vossius & Partner Patentanwälte Rechtsanwälte mbB
(86) International application number: PCT/CN2022/122580
(87) International publication number: WO 2023/051688

(56) References cited:
- EP-A1- 4 412 076
- CN-A- 104 579 080
- CN-A- 110 729 922
- CN-A- 110 829 903
- CN-A- 113 765 444
- JP-A- 2004 064 909
- US-A1- 2002 097 015
- US-A1- 2005 073 280
- US-A1- 2013 119 900
- US-A1- 2016 072 416
- YAN LUOCHENG ET AL: "Torque ripple suppression of permanent magnet synchronous machines by minimal harmonic current injection", IET POWER ELECTRONICS, IET, UK, vol. 12, no. 6, 29 May 2019 (2019-05-29), pages 1368 - 1375, XP006083980, ISSN: 1755-4535, DOI: 10.1049/IET-PEL.2018.5647

## Description

### Technical Field

The disclosure relates to a method for suppressing a vehicle low-speed shudder, and in particular, to a harmonic current injection method for suppressing a vehicle low-speed shudder, an apparatus, and a computer-readable storage medium.

### Background Art

A permanent magnet synchronous motor inevitably generates harmonic components of a back electromotive force during ontology design of the motor, and thereby generates harmonic currents in stator windings of the motor. The interaction of the harmonic components of the back electromotive force, the harmonic currents, fundamental components of the back electromotive force, and a fundamental current may cause a high-order torque pulsation on a shaft of the motor, which is reflected as a problem of a vehicle low-speed shudder under a low-speed operating condition of the vehicle. In order to minimize the discomfort brought about to a user due to a vehicle low-speed shudder, software control means is required to reduce a higher-order torque pulsation by means of a harmonic current injection method, so as to suppress the shudder under a low-speed condition. However, existing harmonic current injection methods are unable to effectively suppress vehicle shudders under low-speed conditions due to a limitation that a low-speed shudder frequency is within a bandwidth control range of a fundamental current loop.

The prior art discloses various methods for reducing torque ripple and magnetic noise in AC rotary electric machines, often by superimposing harmonic currents.

For example, US 2013/119900 A1 discloses a controller that injects multiple harmonic current components, such as (k-1) and (k+1) order harmonics, to cancel a k-th order torque ripple. This document discloses also the features of the preamble of claim 1, 4 and 5.

Similarly, US 2005/073280 A1 teaches superimposing an n-th order harmonic current to reduce an (n-1)-th order harmonic component of radial magnetic excitation force, which is a source of magnetic noise. The non-patent literature with the title "Torque ripple suppression of permanent magnet synchronous machines by minimal harmonic current injection", by YAN LUOCHENG ET AL. also discusses the suppression of torque ripple in permanent magnet synchronous machines through harmonic current injection. An alternative approach is shown in US 2016/072416 A1, which addresses torque ripple by using a motor with multiple winding sets and controlling the induced voltages to have a trapezoidal waveform with a phase difference between the sets. Furthermore, EP 4 412 076 A1, a European patent application from the same applicant having the same priority date as the present application, discloses a harmonic current injection method for suppressing high-order noise in a vehicle.

### Summary

The subject-matter of the present invention is defined by the features of the independent claims. Further preferred embodiments of the present invention are defined in the dependent claims.

Objective of the disclosure: In view of the above-mentioned problems, the disclosure proposes a harmonic current injection method for suppressing a vehicle low-speed shudder, an apparatus, and a computer-readable storage medium, which can effectively alleviate the problem of a vehicle low-speed shudder.

The subject-matter of the present invention is defined by the features of independent claim 1. Further preferred embodiments of the present invention are defined in the dependent claims.
in particular, the technical solution used in the disclosure is a harmonic current injection method for suppressing a vehicle low-speed shudder, the method includes the steps as follows.
(1) Obtain d-axis and q-axis components of a total sampled current after coordinate transformation of sampled three-phase currents. This step involves the process of: sampling U-phase, V-phase, and W-phase currents of the permanent magnet synchronous motor and then subjecting the sampled three-phase currents to Clark transformation and Park transformation into a two-phase synchronous rotating coordinate system, to obtain the d-axis and q-axis components of the total sampled current including the harmonic currents.
(2) According to a harmonic torque and a rotation speed of a permanent magnet synchronous motor, calculate given values of a d-axis component and a q-axis component of a 5th harmonic current and given values of a d-axis component and a q-axis component of a 7th harmonic current, as well as given values of a d-axis component and a q-axis component of a fundamental current, by using the following calculation formula: $\begin{matrix}{T}_{e} = {\sum }_{i = 1 , 5} {I}_{m i} sin \left(i\left(ωt+θ\right)\right) ⋅ \frac{{\sum }_{j = 1 , 5 , 7} {E}_{m j} sin \left(jωt\right)}{Ω} + {\sum }_{i = 1 , 5} {I}_{m i} sin \left(i\left(ωt+θ-\frac{2}{3}π\right)\right) ⋅ \frac{{\sum }_{j = 1 , 5 , 7} {E}_{m j} sin \left(j\left(ωt-\frac{2}{3}π\right)\right)}{Ω} + \\ {\sum }_{i = 1 , 5} {I}_{m i} sin \left(i\left(ωt+θ+\frac{2}{3}π\right)\right) ⋅ \frac{{\sum }_{j = 1 , 5 , 7} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6}\end{matrix}$
   where *T*₆ represents a 6th-order torque, *Iₘᵢ* represents a magnitude of an *i*th-order harmonic current, and *Eₘⱼ* represents a magnitude of a jth-order harmonic back electromotive force; *T*ₑ represents an electromagnetic torque, *ω* represents an electrical angular velocity of the motor, and Ω represents a mechanical angle velocity of the motor; *θ* represents an initial phase of a fundamental wave, *nₚ* represents a number of pole pairs of the motor, *L_{d}* represents a direct-axis inductance, and *L_{q}* represents a quadrature-axis inductance;
   and *T*₆ is expressed as: ${T}_{6} = \frac{3}{2} {n}_{p} \left({L}_{d}-{L}_{q}\right) \left({i}_{d 1}{i}_{q 5}+{i}_{d 5}{i}_{q 1}\right)$
   where ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$
   where *θ*₅ represents an initial phase of the 5th harmonic current; and
   when the given values of the d-axis component and the q-axis component of the 7th harmonic current are set to 0, the given values of the d-axis component and the q-axis component of the 5th harmonic current are obtained, which are used as the given values of the d-axis component and the q-axis component of the 5th harmonic current and the given values of the d-axis component and the q-axis component of the 7th harmonic current.
(3) Perform inverse Park transformation on the given values of the d-axis component and the q-axis component of the 5th harmonic current and the given values of the d-axis component and the q-axis component of the 7th harmonic current obtained in step (2), to obtain given values of the d-axis component and the q-axis component of the 5th harmonic current and given values of the d-axis component and the q-axis component of the 7th harmonic current in a fundamental synchronous rotating coordinate system.
(4) Superimpose both the given value of the d-axis component of the 5th harmonic current and the given value of the d-axis component of the 7th harmonic current in the fundamental synchronous rotating coordinate system onto the given value of the d-axis component of the fundamental current of the current loop, to obtain a given value *i_{d_ref}* of a d-axis component of the current loop; superimpose both the given value of the q-axis component of the 5th harmonic current and the given value of the q-axis component of the 7th harmonic current in the fundamental synchronous rotating coordinate system onto the given value of the q-axis component of the fundamental current of the current loop, to obtain a given value *i_{q_ref}* of a d-axis component of the current loop; and then perform closed-loop control on the respective d-axis component and q-axis component of the sampled current by using the given value of the d-axis component and the given value of the q-axis component of the current loop as inputs to the current loop at a d axis and a q axis, respectively, and finally obtain outputs *u_{d}* and *u_{q}* for the current loop at the d axis and the q axis, respectively.

The performing closed-loop control on the respective d-axis component and q-axis component of the sampled current by respectively using the given value of the d-axis component and the given value of the q-axis component of the current loop as inputs to the current loop at a d axis and a q axis in step (4) is performed by a proportional-integral controller.

Correspondingly, there is proposed a computer-readable storage medium. The computer-readable storage medium has stored thereon a harmonic current injection control program for suppressing a vehicle low-speed shudder, where the harmonic current injection control program performs the steps of the above harmonic current injection method.

The disclosure further proposes a control apparatus for a permanent magnet synchronous motor. The apparatus includes a signal acquisition module, a memory, a processor, a controller, and a harmonic current injection control program stored on the memory and executable on the processor, where the signal acquisition module is configured to sample a motor status signal and then send same to the processor, the processor executes the harmonic current injection control program to output a voltage control signal and then send same to the controller for controlling a voltage of the permanent magnet synchronous motor, and the harmonic current injection control program performs the steps of the above harmonic current injection method.

The invention is defined by the method of claim 1, computer-media of claim 4 and the device of claim 5. Preferred embodiments of invention are disclosed in dependent claims 2 and 3.

Beneficial effects: The disclosure has the following advantages over the prior art: In the disclosure, a relational expression between a harmonic current and a harmonic torque under an extreme low-speed operating condition is proposed; afterwards, given values for 5th and 7th harmonic currents required to suppress a vehicle low-speed shudder are calculated based on the equation; and then, the given values for the 5th and 7th harmonic currents are transformed into a fundamental coordinate system, and then jointly superimposed onto a given value for a fundamental current as a fundamental current loop, the sum of which is used as an input for control of the current loop. The harmonic current injection method of the disclosure can achieve an excellent effect in a scenario of suppressing a vehicle shudder at an extremely low speed.

### Brief Description of the Drawings

FIG. 1 is a control block diagram of a motor control apparatus for suppressing a 6th-order torque pulsation under a low-speed operating condition of a vehicle according to the disclosure; and
FIG. 2 is a flowchart of a harmonic current injection method for suppressing a 6th-order torque pulsation under a low-speed operating condition of a vehicle according to the disclosure.

### Detailed Description of Embodiments

The technical solutions of the disclosure will be further described below with reference to the accompanying drawings and embodiments.

The harmonic current injection method for suppressing a vehicle low-speed shudder according to the disclosure includes the steps as follows.

### (1) Transformation of currents.

At first, U-phase, V-phase, and W-phase currents of a permanent magnet synchronous motor are sampled and then subjected to Clark transformation and Park transformation into a two-phase synchronous rotating coordinate system, to obtain d-axis and q-axis components of a total sampled current including harmonic currents, so as to obtain a feedback value *i_{d_fdb}* of the d-axis component and a feedback value *i_{q_fdb}* of the q-axis component of the sampled current.

### (2) Calculation of given values for harmonic currents.

A relationship between parameters, such as a harmonic current and a harmonic torque, of an embedded permanent magnet synchronous motor under an extremely low-speed operating condition (generally at below 200RPM) is presented: $\begin{matrix}{T}_{e} = {\sum }_{i = 1 , 5 , 11} {I}_{m i} sin \left(i\left(ωt+θ\right)\right) ⋅ \frac{{\sum }_{j = 1 , 5 , 7 , 11 , 13} {E}_{m j} sin \left(jωt\right)}{Ω} + {\sum }_{i = 1 , 5 , 11} {I}_{m i} sin \left(i\left(ωt+θ-\frac{2}{3}π\right)\right) ⋅ \frac{{\sum }_{j = 1 , 5 , 7 , 11 , 13} {E}_{m j} sin \left(j\left(ωt-\frac{2}{3}π\right)\right)}{Ω} + \\ {\sum }_{i = 1 , 5 , 11} {I}_{m i} sin \left(i\left(ωt+θ+\frac{2}{3}π\right)\right) ⋅ \frac{{\sum }_{j = 1 , 5 , 7 , 11 , 13} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6} + {T}_{12}\end{matrix}$

In the disclosure, with regard to the problem of the vehicle low-speed shudder, it can be considered that higher-order harmonics above the 6th order have little effect. Therefore, an 11th-order harmonic current, an 11th-order and 13th-order harmonic back electromotive force, and a 12th-order torque *T*₁₂ are negligible, and the above formula is changed to: $\begin{matrix}{T}_{e} = {\sum }_{i = 1 , 5} {I}_{m i} sin \left(i\left(ωt+θ\right)\right) ⋅ \frac{{\sum }_{j = 1 , 5 , 7} {E}_{m j} sin \left(jωt\right)}{Ω} + {\sum }_{i = 1 , 5} {I}_{m i} sin \left(i\left(ωt+θ-\frac{2}{3}π\right)\right) ⋅ \frac{{\sum }_{j = 1 , 5 , 7} {E}_{m j} sin \left(j\left(ωt-\frac{2}{3}π\right)\right)}{Ω} + \\ {\sum }_{i = 1 , 5} {I}_{m i} sin \left(i\left(ωt+θ+\frac{2}{3}π\right)\right) ⋅ \frac{{\sum }_{j = 1 , 5 , 7} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6}\end{matrix}$ where *T*₆ represents a 6th-order torque, Eₘ₁ represents a magnitude of a fundamental back electromotive force, Eₘ₅ represents a magnitude of a 5th harmonic back electromotive force, Eₘ₇ represents a magnitude of a 7th harmonic back electromotive force, *I*ₘ₁ is a magnitude of a fundamental current, *I*ₘ₅ is a magnitude of a 5th harmonic current, *T*ₑ represents an electromagnetic torque, *ω* represents an electrical angular velocity of the motor, and Ω represents a mechanical angle velocity of the motor; and *θ* represents an initial phase of a fundamental wave, *nₚ* represents a number of pole pairs of the motor, *L_{d}* represents a direct-axis inductance, and *L_{q}* represents a quadrature-axis inductance.

*T*₆ is expressed as: ${T}_{6} = \frac{3}{2} {n}_{p} \left({L}_{d}-{L}_{q}\right) \left({i}_{d 1}{i}_{q 5}+{i}_{d 5}{i}_{q 1}\right)$ where ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$ where *θ*₅ represents an initial phase of the 5th harmonic current.

Letting *i*_{*d*7} = 0 and *i*_{*q*7} = 0, the above equations are combined, and then solved by means of MATLAB, to obtain *i*_{*d*5} and *i*_{*q*5}*.* In other words, when given values of a d-axis component and a q-axis component of a 7th harmonic current are set to 0, given values of a d-axis component and a q-axis component of the 5th harmonic current are obtained. The above four values are used as the given values of the harmonic currents obtained through current superposition, i.e., *i*_{*d*5}*_{th_ref}, i*_{*q*5}*_{th_ref}, i*_{*d*7}*_{th_ref},* and *i*_{*d*7}*_{th_ref}.*
therefore, numerical relationships between the harmonic currents and the parameters under the extremely low-speed operating condition are obtained, where *n* is a rotation speed, and Ω=2π*n*: ${i}_{d 5 th _ ref} = {f}_{1} \left({T}_{6}, {E}_{m 5}, {E}_{m 7}, {T}_{e}, n\right)$ ${i}_{q 5 th _ ref} = {g}_{1} \left({T}_{6}, {E}_{m 5}, {E}_{m 7}, {T}_{e}, n\right)$ ${i}_{d 7 th _ ref} = {f}_{2} \left({T}_{6}, {E}_{m 5}, {E}_{m 7}, {T}_{e}, n\right)$ ${i}_{d 7 th _ ref} = {g}_{2} \left({T}_{6}, {E}_{m 5}, {E}_{m 7}, {T}_{e}, n\right)$

In order to simplify the calculation performed during actual injection, a given value of each high-order harmonic current required to suppress the vehicle low-speed shudder under conditions of different torques and different rotation speeds can be calculated, and on this basis, a two-dimensional table with the torque as horizontal coordinates and the rotation speed as vertical coordinates can be made.

Calculation of given values of d-axis and q-axis components of a fundamental current:
The given values of the d-axis and q-axis components of the fundamental current are obtained by means of a maximum torque per ampere (MTPA) algorithm, and a search is performed, according to the principle of maximum torque per ampere, in the two-dimensional table with the torque Te as the horizontal coordinates and the rotation speed ω as the vertical coordinates, to obtain: $\frac{\partial {T}_{e}}{\partial {i}_{s}} = 0$ ${i}_{s}^{2} = {i}_{d 1 st _ ref}^{2} + {i}_{q 1 st _ ref}^{2} \leq {i}_{s max}^{2}$ ${u}_{d 1 st _ ref}^{2} + {u}_{q 1 st _ ref}^{2} \leq {u}_{s max}^{2}$ ${u}_{d 1 st _ ref} = \left({R}_{s}{i}_{d 1 st _ ref}+{L}_{d}p\right) {i}_{d 1 st _ ref} - {ωL}_{q} {i}_{q 1 st _ ref}$ ${u}_{q 1 st _ ref} = \left({R}_{s}{i}_{q 1 st _ ref}+{L}_{q}p\right) {i}_{q 1 st _ ref} + ω \left({ψ}_{f}+{L}_{d}{i}_{d 1 st _ ref}\right)$ where *iₛ* is a magnitude of the fundamental current, and *i*_{*s*max} is a maximum phase-current magnitude, depending on a maximum current capability that an IGBT and the motor can withstand. *u*_{*s* max} is a maximum phase-voltage magnitude, depending on a voltage capability that a direct-current bus can provide, and *p* is a differential operator. *i*_{*d*1*st_ref*} is a given value for a d-axis fundamental current, *i*_{*q*1*st_ref*} is a given value for a q-axis fundamental current, *u*_{*d*1*st_ref*} is a terminal voltage generated by the d-axis fundamental current, *n*_{*q*1*st_ref*} is a terminal voltage generated by the q-axis fundamental current, *T*ₑ is the electromagnetic torque, *L_{d}* represents the direct-axis inductance, and *L_{q}* represents the quadrature-axis inductance. *Rₛ* is an internal resistance of a motor stator, *ψ_{f}* is a flux linkage value of a permanent magnet, and *ω* represents the electrical angular velocity of the motor.

### (3) Transformation of the harmonic currents into a fundamental coordinate system.

Inverse Park transformation is performed on the harmonic currents obtained in the step of calculation of given values for harmonic currents, transformation angles used for the 5th and 7th harmonics are -6*θ* and +6*θ*, respectively, such that sinusoidal small-signal alternating-current pulsation quantities under the transformation of the harmonic currents into the fundamental coordinate system are obtained. *θ* is an included angle between a fundamental synchronous rotating coordinate system and a stationary coordinate system.

The d-axis component of the 5th current harmonic, the q-axis component of the 5th current harmonic, the d-axis component of the 7th current harmonic, and the q-axis component of the 7th current harmonic are subjected to the inverse Park transformation into the fundamental synchronous rotating coordinate system, such that a given value of the d-axis component of the 5th harmonic current in an alternating-current pulsation mode, a given value of the q-axis component of the 5th harmonic current in the alternating-current pulsation mode, a given value of the d-axis component of the 7th harmonic current in the alternating-current pulsation mode, and a given value of the q-axis component of the 7th harmonic current in the alternating-current pulsation mode in the fundamental synchronous rotating coordinate system are respectively obtained.

### (4) Regulation control of a current loop.

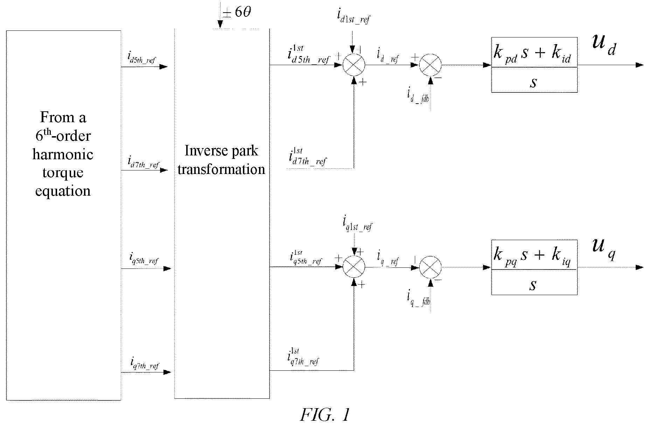

The given values of the d-axis component and the q-axis component of the 5th harmonic current and the given values of the d-axis component and the q-axis component of the 7th harmonic current transformed into the fundamental coordinate system and obtained in the step of transformation of the harmonic currents into the fundamental coordinate system are respectively superimposed onto the given values of the d-axis and q-axis components of the fundamental current. In other words, the d-axis component of the fundamental current is summed with the d-axis component of the 5th harmonic current and the d-axis component of the 7th harmonic current transformed into the fundamental coordinate system, and a summation result is denoted as a given value *i_{d_ref}* of a d-axis component of a current loop; and the q-axis component of the fundamental current is summed with the q-axis component of the 5th harmonic current and the q-axis component of the 7th harmonic current transformed into the fundamental coordinate system, and a summation result is denoted as *i_{q_ref}.* Then, closed-loop control is performed by using the given value of the d-axis component and the given value of the q-axis component of the current loop as inputs to the current loop at a d axis and a q axis, respectively. As shown in FIG. *1**, i_{d_fdb}* and *i_{q_fdb}* in the figure are feedback values of the d-axis and q-axis components of the sampled current, respectively. Outputs *u_{d}* and *u_{q}* are finally obtained for the current loop at the d axis and the q axis, respectively. In this embodiment, PID closed-loop control is preferred, and instead, other closed-loop controllers may also be used.

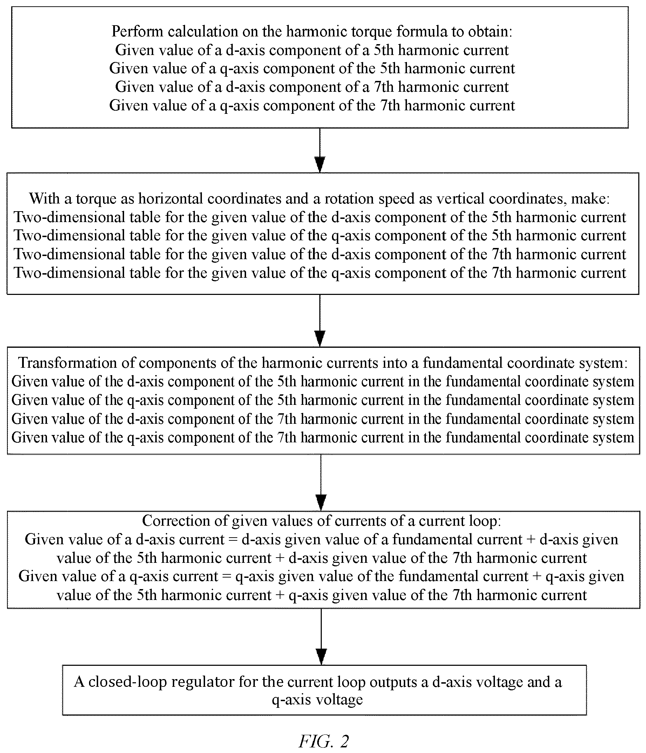

The process corresponding to steps (2) to (4) is shown in FIG. 2. Correspondingly, the control apparatus for a permanent magnet synchronous motor according to the disclosure includes a signal acquisition module, a memory, a processor, a controller, and a harmonic current injection control program stored on the memory and executable on the processor, where the signal acquisition module is configured to sample a three-phase current signal and then send same to the processor, the processor executes the harmonic current injection control program to output a voltage control signal, the controller receives the voltage control signal sent by the processor, and accordingly controls a voltage of the permanent magnet synchronous motor, and the harmonic current injection control program performs the steps of the above harmonic current injection method.

The disclosure is described with reference to the flowchart and/or block diagram of the method, device (system), and computer program product according to the embodiments of the disclosure. It is to be understood that each of the processes and/or blocks in the flowchart and/or block diagram, and a combination of processes and/or blocks in the flowchart and/or block diagram, may be implemented by computer program instructions. These computer program instructions can be provided to a processor of a general-purpose computer, a dedicated computer, an embedded processor, or another programmable data processing device to form a machine, so that the instructions executed by the processor of the computer or the another programmable data processing device produce an apparatus for implementing the functions specified in one or more processes of the flowchart and/or one or more blocks of the block diagram.

These computer program instructions may also be stored in a computer-readable memory which directs the computer or the another programmable data processing device to operate in a particular manner, such that the instructions stored in the computer-readable memory produce an article of manufacture including an instructing apparatus. The instructing apparatus implements the functions specified in one or more processes of the flowchart and/or one or more blocks of the block diagram.

These computer program instructions may also be loaded onto the computer or the another programmable data processing device, such that a series of operational steps are performed on the computer or the another programmable device to produce computer-implemented processing, and the instructions executed on the computer or the another programmable device thus provide steps for implementing the functions specified in one or more processes of the flowchart and/or one or more blocks of the block diagram.

## Claims

1. A harmonic current injection method for suppressing a vehicle low-speed shudder, the method comprising the following steps:
(1) obtaining d-axis and q-axis components of a total sampled current after coordinate transformation of sampled three-phase currents;
(2) according to a harmonic torque and a rotation speed of a permanent magnet synchronous motor, calculating given values of a d-axis component and a q-axis component of a 5th harmonic current and given values of a d-axis component and a q-axis component of a 7th harmonic current, as well as given values of a d-axis component and a q-axis component of a fundamental current;
(3) performing inverse Park transformation on the given values of the d-axis component and the q-axis component of the 5th harmonic current and the given values of the d-axis component and the q-axis component of the 7th harmonic current obtained in step (2), to obtain given values of the d-axis component and the q-axis component of the 5th harmonic current and given values of the d-axis component and the q-axis component of the 7th harmonic current in a fundamental synchronous rotating coordinate system; and
(4) superimposing both the given value of the d-axis component of the 5th harmonic current and the given value of the d-axis component of the 7th harmonic current in the fundamental synchronous rotating coordinate system onto the given value of the d-axis component of the fundamental current, to obtain a given value of a d-axis component of a current loop; superimposing both the given value of the q-axis component of the 5th harmonic current and the given value of the q-axis component of the 7th harmonic current in the fundamental synchronous rotating coordinate system onto the given value of the q-axis component of the fundamental current of the current loop, to obtain a given value of a d-axis component of the current loop; and then performing closed-loop control on the respective d-axis component and q-axis component of the sampled current by using the given value of the d-axis component and the given value of the q-axis component of the current loop as inputs to the current loop at a d axis and a q axis, respectively, and finally outputting voltage control signals for the current loop at the d axis and the q axis, respectively, **characterized by**
calculating given values of a d-axis component and a q-axis component of a 5th harmonic current in step (2) is performed by combining the following electromagnetic torque equations and solving the combined equations under a condition that the d-axis component and the q-axis component of the 7th harmonic current are set to zero,, thereby determining the d-axis component and the q-axis component of the 5th harmonic current for subsequent harmonic current superposition: $\begin{matrix}{T}_{e} = {\sum }_{i = 1 , 5} {I}_{m i} sin \left(i\left(ωt+θ\right)\right) ⋅ \frac{{\sum }_{j = 1 , 5 , 7} {E}_{m j} sin \left(jωt\right)}{Ω} + {\sum }_{i = 1 , 5} {I}_{m i} sin \left(i\left(ωt+θ-\frac{2}{3}π\right)\right) ⋅ \frac{{\sum }_{j = 1 , 5 , 7} {E}_{m j} sin \left(j\left(ωt-\frac{2}{3}π\right)\right)}{Ω} + \\ {\sum }_{i = 1 , 5} {I}_{m i} sin \left(i\left(ωt+θ+\frac{2}{3}π\right)\right) ⋅ \frac{{\sum }_{j = 1 , 5 , 7} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6}\end{matrix}$
wherein *T*₆ represents a 6th-order torque, *Iₘᵢ* represents a magnitude of an ith-order harmonic current, and *Eₘⱼ* represents a magnitude of a *j*th-order harmonic back electromotive force; *T*ₑ represents an electromagnetic torque, *ω* represents an electrical angular velocity of the motor, and Ω represents a mechanical angle velocity of the motor; *θ* represents an initial phase of a fundamental wave, *n_{g}* represents a number of pole pairs of the motor, *L_{d}* represents a direct-axis inductance, and *L_{q}* represents a quadrature-axis inductance;
and *T*₆ is expressed as: ${T}_{6} = \frac{3}{2} {n}_{p} \left({L}_{d}-{L}_{q}\right) \left({i}_{d 1}{i}_{q 5}+{i}_{d 5}{i}_{q 1}\right)$
wherein ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$
wherein *θ*₅ represents an initial phase of the 5th harmonic current.

2. The harmonic current injection method for suppressing a vehicle low-speed shudder according to claim 1, wherein the obtaining d-axis and q-axis components of a total sampled current after coordinate transformation of sampled three-phase currents in step (1) involves sampling U-phase, V-phase, and W-phase currents of the permanent magnet synchronous motor and then subjecting the sampled three-phase currents to Clark transformation and Park transformation into a two-phase synchronous rotating coordinate system, to obtain the d-axis and q-axis components of the total sampled current comprising the harmonic currents.

3. The harmonic current injection method for suppressing a vehicle low-speed shudder according to claim 1, wherein the performing closed-loop control on the respective d-axis component and q-axis component of the sampled current by respectively using the given value of the d-axis component and the given value of the q-axis component of the current loop as inputs to the current loop at a d axis and a q axis in step (4) is performed by a proportional-integral controller.

4. A computer-readable storage medium, having stored thereon a harmonic current injection control program for suppressing a vehicle low-speed shudder, **characterized in that**
the harmonic current injection control program performs the steps of a harmonic current injection method for suppressing a vehicle low-speed shudder according to any one of claims 1 to 3.

5. A control apparatus for a permanent magnet synchronous motor, comprising a signal acquisition module, a memory, a processor, a controller, and a harmonic current injection control program stored on the memory and executable on the processor, wherein the signal acquisition module is configured to sample a motor status signal and then send same to the processor, the processor executes the harmonic current injection control program to output a voltage control signal and then send same to the controller for controlling a voltage of the permanent magnet synchronous motor, and **characterized in that**
the harmonic current injection control program performs the steps of a harmonic current injection method for suppressing a vehicle low-speed shudder according to any one of claims 1 to 3.

## Patentansprüche

1. Oberschwingungsstrominjektionsverfahren zum Dämpfen einer Fahrzeugschwingung bei niedriger Geschwindigkeit, wobei das Verfahren die folgenden Schritte umfasst:
(1) Erhalten von d-Achsen- und q-Achsen-Komponenten eines abgetasteten Gesamtstroms nach einer Koordinatentransformation von abgetasteten Dreiphasenströmen;
(2) gemäß einem Oberschwingungsmoment und einer Drehzahl eines Permanentmagnetsynchronmotors, Berechnen gegebener Werte einer d-Achsenkomponente und einer q-Achsenkomponente eines Oberschwingungsstroms 5. Ordnung und gegebener Werte einer d-Achsenkomponente und einer q-Achsenkomponente eines Oberschwingungsstroms 7. Ordnung sowie gegebener Werte einer d-Achsenkomponente und einer q-Achsenkomponente eines Grundschwingungsstroms;
(3) Durchführen einer inversen Park-Transformation an den gegebenen Werten der d-Achsenkomponente und der q-Achsenkomponente des Oberschwingungsstroms 5. Ordnung und den gegebenen Werten der d-Achsenkomponente und der q-Achsenkomponente des Oberschwingungsstroms 7. Ordnung, die in Schritt (2) erhalten wurden, um gegebene Werte der d-Achsenkomponente und der q-Achsenkomponente des Oberschwingungsstroms 5. Ordnung und gegebene Werte der d-Achsenkomponente und der q-Achsenkomponente des Oberschwingungsstroms 7. Ordnung in einem umlaufenden synchronen Grundschwingungskoordinatensystem zu erhalten; und
(4) Überlagern sowohl des gegebenen Werts der d-Achsenkomponente des Oberschwingungsstroms 5. Ordnung als auch des gegebenen Werts der d-Achsenkomponente des Oberschwingungsstroms 7. Ordnung in dem umlaufenden synchronen Grundschwingungskoordinatensystem auf den gegebenen Wert der d-Achsenkomponente des Grundschwingungsstroms, um einen gegebenen Wert einer d-Achsenkomponente einer Stromschleife zu erhalten; Überlagern sowohl des gegebenen Werts der q-Achsenkomponente des Oberschwingungsstroms 5. Ordnung als auch des gegebenen Werts der q-Achsenkomponente des Oberschwingungsstroms 7. Ordnung in dem umlaufenden synchronen Grundschwingungskoordinatensystem auf den gegebenen Wert der q-Achsenkomponente des Grundschwingungsstroms der Stromschleife, um einen gegebenen Wert einer d-Achsenkomponente der Stromschleife zu erhalten; und dann Durchführen einer Regelung an der jeweiligen d-Achsenkomponente und q-Achsenkomponente des abgetasteten Stroms unter Verwendung des gegebenen Werts der d-Achsenkomponente und des gegebenen Werts der q-Achsenkomponente der Stromschleife als Eingaben in die Stromschleife an einer d-Achse bzw. einer q-Achse, und schließlich Ausgeben von Spannungssteuersignalen für die Stromschleife an der d-Achse bzw. der q-Achse,
**dadurch gekennzeichnet, dass**
das Berechnen gegebener Werte einer d-Achsenkomponente und einer q-Achsenkomponente eines Oberschwingungsstroms 5. Ordnung in Schritt (2) durch Kombinieren der folgenden elektromagnetischen Drehmomentgleichungen und Lösen der kombinierten Gleichungen unter einer Bedingung durchgeführt wird, dass die d-Achsenkomponente und die q-Achsenkomponente des Oberschwingungsstroms 7. Ordnung auf Null gesetzt werden, dadurch Bestimmen der d-Achsenkomponente und der q-Achsenkomponente des Oberschwingungsstroms 5. Ordnung für eine nachfolgende Oberschwingungsstromüberlagerung: $\begin{matrix}{T}_{e} = {\sum }_{i = 1 , 5} {I}_{m i} sin \left(i\left(ωt+θ\right)\right) ⋅ \frac{{\sum }_{j = 1 , 5 , 7} {E}_{m j} sin \left(jωt\right)}{Ω} + {\sum }_{i = 1 , 5} {I}_{m i} sin \left(i\left(ωt+θ-\frac{2}{3}π\right)\right) ⋅ \frac{{\sum }_{j = 1 , 5 , 7} {E}_{m j} sin \left(j\left(ωt-\frac{2}{3}π\right)\right)}{Ω} + \\ {\sum }_{i = 1 , 5} {I}_{m i} sin \left(i\left(ωt+θ+\frac{2}{3}π\right)\right) ⋅ \frac{{\sum }_{j = 1 , 5 , 7} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6}\end{matrix}$
wobei T₆ ein Drehmoment 6. Ordnung darstellt, Iₘᵢ eine Größe eines Oberschwingungsstroms i. Ordnung darstellt und Eₘⱼ eine Größe einer elektromotorischen Gegenkraft einer Oberschwingung j. Ordnung darstellt; wobei Tₑ ein elektromagnetisches Drehmoment darstellt, ω eine elektrische Winkelgeschwindigkeit des Motors darstellt und Ω eine mechanische Winkelgeschwindigkeit des Motors darstellt; wobei θ eine Anfangsphase einer Grundwelle darstellt, nₚ eine Anzahl von Polpaaren des Motors darstellt, L_{d} eine Direktachsen-Induktivität darstellt und L_{q} eine Quadraturachsen-Induktivität darstellt;
und wobei T₆ ausgedrückt wird als: ${T}_{6} = \frac{3}{2} {n}_{p} \left({L}_{d}-{L}_{q}\right) \left({i}_{d 1}{i}_{q 5}+{i}_{d 5}{i}_{q 1}\right)$
wobei ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$
wobei θ₅ eine Anfangsphase des Oberschwingungsstroms 5. Ordnung darstellt.

2. Oberschwingungsstrominjektionsverfahren zum Dämpfen einer Fahrzeugschwingung bei niedriger Geschwindigkeit nach Anspruch 1, wobei das Erhalten von d-Achsen- und q-Achsen-Komponenten eines abgetasteten Gesamtstroms nach einer Koordinatentransformation von abgetasteten Dreiphasenströmen in Schritt (1) Abtasten von U-Phasen-, V-Phasen-, und W-Phasenströmen des Permanentmagnetsynchronmotors und dann Unterziehen der abgetasteten Dreiphasenströme einer Clarke-Transformation und Park-Transformation in ein umlaufendes synchrones Zweiphasen-Koordinatensystem, um die d-Achsen- und q-Achsen-Komponenten des abgetasteten Gesamtstroms mit den Oberschwingungsströmen zu erhalten.

3. Oberschwingungsstrominjektionsverfahren zum Dämpfen einer Fahrzeugschwingung bei niedriger Geschwindigkeit nach Anspruch 1, wobei das Durchführen einer Regelung an der d-Achsenkomponente bzw. q-Achsenkomponente des abgetasteten Stroms durch Verwenden des gegebenen Werts der d-Achsenkomponente bzw. des gegebenen Werts der q-Achsenkomponente der Stromschleife als Eingaben in die Stromschleife an einer d-Achse und einer q-Achse in Schritt (4) durch eine Proportional-Integral-Steuerung durchgeführt wird.

4. Computerlesbares Speichermedium, auf dem ein Oberschwingungsstrominjektionssteuerprogramm zum Dämpfen einer Fahrzeugschwingung bei niedriger Geschwindigkeit gespeichert ist,
**dadurch gekennzeichnet, dass**
das Oberschwingungsstrominjektionssteuerprogramm die Schritte eines Oberschwingungsstrominjektionsverfahrens zum Dämpfen einer Fahrzeugschwingung bei niedriger Geschwindigkeit nach einem der Ansprüche 1 bis 3 durchführt.

5. Steuervorrichtung für einen Permanentmagnetsynchronmotor, umfassend ein Signalerfassungsmodul, einen Speicher, einen Prozessor, eine Steuerung und ein Oberschwingungsstrominjektionssteuerprogramm, das in dem Speicher gespeichert und auf dem Prozessor ausführbar ist, wobei das Signalerfassungsmodul dazu ausgelegt ist, ein Motorstatussignal abzutasten und dieses dann an den Prozessor zu senden, wobei der Prozessor das Oberschwingungsstrominjektionssteuerprogramm ausführt, um ein Spannungssteuersignal auszugeben und dieses dann an die Steuerung zum Steuern einer Spannung des Permanentmagnetsynchronmotors zu senden, und **dadurch gekennzeichnet, dass**
das Oberschwingungsstrominjektionssteuerprogramm die Schritte eines Oberschwingungsstrominjektionsverfahrens zum Dämpfen einer Fahrzeugschwingung bei niedriger Geschwindigkeit nach einem der Ansprüche 1 bis 3 durchführt.

## Revendications

1. Procédé d'injection de courant harmonique pour supprimer une vibration à basse vitesse d'un véhicule, le procédé comprenant les étapes suivantes :
(1) l'obtention de composantes sur l'axe d et sur l'axe q d'un courant total échantillonné après transformation de coordonnées de courants triphasés échantillonnés ;
(2) le calcul, en fonction d'un couple harmonique et d'une vitesse de rotation d'un moteur synchrone à aimants permanents, de valeurs de consigne d'une composante sur l'axe d et d'une composante sur l'axe q d'un courant harmonique de rang 5 et de valeurs de consigne d'une composante sur l'axe d et d'une composante sur l'axe q d'un courant harmonique de rang 7, ainsi que de valeurs de consigne d'une composante sur l'axe d et d'une composante sur l'axe q d'un courant fondamental ;
(3) la réalisation d'une transformation de Park inverse sur les valeurs de consigne de la composante sur l'axe d et de la composante sur l'axe q du courant harmonique de rang 5 et sur les valeurs de consigne de la composante sur l'axe d et de la composante sur l'axe q du courant harmonique de rang 7 obtenues à l'étape (2), afin d'obtenir des valeurs de consigne de la composante sur l'axe d et de la composante sur l'axe q du courant harmonique de rang 5 et des valeurs de consigne de la composante sur l'axe d et de la composante sur l'axe q du courant harmonique de rang 7 dans un système de coordonnées tournant synchrone fondamental ; et
(4) la superposition à la valeur de consigne de la composante sur l'axe d du courant fondamental à la fois de la valeur de consigne de la composante sur l'axe d du courant harmonique de rang 5 et de la valeur de consigne de la composante sur l'axe d du courant harmonique de rang 7 dans le système de coordonnées tournant synchrone fondamental, afin d'obtenir une valeur de consigne d'une composante sur l'axe d d'une boucle de courant ; la superposition à la valeur de consigne de la composante sur l'axe q du courant fondamental de la boucle de courant à la fois de la valeur de consigne de la composante sur l'axe q du courant harmonique de rang 5 et de la valeur de consigne de la composante sur l'axe q du courant harmonique de rang 7 dans le système de coordonnées tournant synchrone fondamental, afin d'obtenir une valeur de consigne d'une composante sur l'axe q de la boucle de courant ; puis la réalisation d'une commande en boucle fermée de la composante sur l'axe d et de la composante sur l'axe q respectives du courant échantillonné en utilisant, respectivement comme entrées de la boucle de courant sur l'axe d et sur l'axe q, la valeur de consigne de la composante sur l'axe d et la valeur de consigne de la composante sur l'axe q de la boucle de courant, et finalement l'émission de signaux de commande de tension pour la boucle de courant sur l'axe d et sur l'axe q, respectivement,
**caractérisé par**
le calcul de valeurs de consigne d'une composante sur l'axe d et d'une composante sur l'axe q d'un courant harmonique de rang 5 à l'étape (2) est réalisé en combinant les équations de couple électromagnétique suivantes et en résolvant les équations combinées dans une condition selon laquelle la composante sur l'axe d et la composante sur l'axe q du courant harmonique de rang 7 sont fixées à zéro, déterminant ainsi la composante sur l'axe d et la composante sur l'axe q du courant harmonique de rang 5 pour une superposition ultérieure du courant harmonique : $\begin{matrix}{T}_{e} = {\sum }_{i = 1 , 5} {I}_{m i} sin \left(i\left(ωt+θ\right)\right) ⋅ \frac{{\sum }_{j = 1 , 5 , 7} {E}_{m j} sin \left(jωt\right)}{Ω} + {\sum }_{i = 1 , 5} {I}_{m i} sin \left(i\left(ωt+θ-\frac{2}{3}π\right)\right) ⋅ \frac{{\sum }_{j = 1 , 5 , 7} {E}_{m j} sin \left(j\left(ωt-\frac{2}{3}π\right)\right)}{Ω} + \\ {\sum }_{i - 1 , 5} {I}_{m i} sin \left(i\left(ωt+θ+\frac{2}{3}π\right)\right) ⋅ \frac{{\sum }_{j = 1 , 5 , 7} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6}\end{matrix}$
T₆ représentant un couple de 6e ordre, Iₘᵢ représente l'amplitude d'un courant harmonique d'ordre i, et Eₘⱼ représente l'amplitude d'une force contre-électromotrice harmonique d'ordre j ; Tₑ représentant un couple électromagnétique, ω représentant une vitesse angulaire électrique du moteur, et Ω représentant une vitesse angulaire mécanique du moteur ; θ représentant une phase initiale d'une onde fondamentale, nₚ représentant un nombre de paires de pôles du moteur, L_{d} représentant une inductance selon l'axe direct, et L_{q} représentant une inductance selon l'axe en quadrature ;
et T₆ étant exprimé comme suit : ${T}_{6} = \frac{3}{2} {n}_{p} \left({L}_{d}-{L}_{q}\right) \left({i}_{d 1}{i}_{q 5}+{i}_{d 5}{i}_{q 1}\right)$ où ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$
θ₅ représentant une phase initiale du courant harmonique de rang 5.

2. Procédé d'injection de courant harmonique pour supprimer une vibration à basse vitesse d'un véhicule selon la revendication 1, dans lequel l'obtention des composantes sur l'axe d et sur l'axe q d'un courant total échantillonné après transformation de coordonnées de courants triphasés échantillonnés à l'étape (1) consiste à échantillonner des courants de phase U, V et W du moteur synchrone à aimants permanents, puis à soumettre les courants triphasés échantillonnés à une transformation de Clarke et à une transformation de Park vers un système de coordonnées tournant synchrone biphasé, afin d'obtenir les composantes sur l'axe d et sur l'axe q du courant total échantillonné comprenant les courants harmoniques.

3. Procédé d'injection de courant harmonique pour supprimer une vibration à basse vitesse d'un véhicule selon la revendication 1, dans lequel l'exécution d'une commande en boucle fermée de la composante sur l'axe d et de la composante sur l'axe q respectives du courant échantillonné en utilisant respectivement la valeur de consigne de la composante sur l'axe d et la valeur de consigne de la composante sur l'axe q de la boucle de courant comme entrées de la boucle de courant sur un axe d et sur un axe q à l'étape (4) est réalisée au moyen d'un régulateur proportionnel-intégral.

4. Support de stockage lisible par ordinateur sur lequel est stocké un programme de commande d'injection de courant harmonique destiné à supprimer une vibration à basse vitesse d'un véhicule,
**caractérisé en ce que**
le programme de commande d'injection de courant harmonique exécute les étapes d'un procédé d'injection de courant harmonique destiné à supprimer une vibration à basse vitesse d'un véhicule selon l'une quelconque des revendications 1 à 3.

5. Appareil de commande pour un moteur synchrone à aimants permanents, comprenant un module d'acquisition de signaux, une mémoire, un processeur, un contrôleur et un programme de commande d'injection de courant harmonique stocké dans la mémoire et exécutable par le processeur, le module d'acquisition de signaux étant configuré pour échantillonner un signal d'état du moteur puis l'envoyer au processeur, le processeur exécutant le programme de commande d'injection de courant harmonique afin de délivrer un signal de commande de tension puis de l'envoyer au contrôleur pour commander une tension du moteur synchrone à aimants permanents, **caractérisé en ce que**
le programme de commande d'injection de courant harmonique exécute les étapes d'un procédé d'injection de courant harmonique destiné à supprimer une vibration à basse vitesse d'un véhicule selon l'une quelconque des revendications 1 à 3.
